**Europäisches Patentamt**

**European Patent Office**

**Office européen des brevets**

(11) Veröffentlichungsnummer: **0 007 509**
**B1**

## (12) EUROPÄISCHE PATENTSCHRIFT

(45) Veröffentlichungstag der Patentschrift: **28.04.82**

(21) Anmeldenummer: **79102351.8**

(22) Anmeldetag: **09.07.79**

(51) Int. Cl.³: **F 16 B 5/00, F 21 V 21/02**

(54) **Befestigungsvorrichtung, insbesondere für Deckeneinbauleuchten.**

(30) Priorität: **27.07.78 DE 7822519 U**

(43) Veröffentlichungstag der Anmeldung:
**06.02.80 Patentblatt 80/3**

(45) Bekanntmachung des Hinweises auf die Patenterteilung:
**28.04.82 Patentblatt 82/17**

(84) Benannte Vertragsstaaten:
**AT IT SE**

(56) Entgegenhaltungen:
**DE - U - 1 896 189**
**FR - A - 1 070 751**
**GB - A - 840 722**
**US - A - 2 270 814**
**US - A - 2 299 870**
**US - A - 2 375 589**
**US - A - 2 867 719**

(73) Patentinhaber: **SIEMENS AKTIENGESELLSCHAFT**
**Berlin und München**
**Postfach 22 02 61**
**D-8000 München 22 (DE)**

(72) Erfinder: **Pöllmann, Johann**
**Blumenweg 7**
**D-8825 Traunwalchen (DE)**

Courier Press, Leamington Spa, England.

Befestigungsvorrichtung, insbesondere für Deckeneinbauleuchten

Die Erfindung betrifft eine Befestigungsvorrichtung zur Verbindung einer Montageschraube mit einem Träger, insbesondere einem Träger einer Deckeneinbauleuchte, der rechtwinkelig zueinander verlaufende Montage- und Führungswandungen mit einer Öffnung in der Montagewandung zum Durchstecken des Kopfes der Montageschraube hat, mit einem Schieber, der eine U-förmige Aufnahme für den Schaft der Montageschraube und ein Langloch zu seiner Halterung an dem Träger aufweist, wobei ein Befestigungsmittel das Langloch und eine weitere Öffnung durchdringt.

Ein aus dem DE—Gbm 1 896 189 bekannter Schieber dieser Art weist nur einen ebenen Teil auf, in dem sich sowohl die Aufnahme als auch das Langloch zu seiner Befestigung an einem Träger befinden. Dementsprechend ragt das Befestigungsmittel für den Schieber aus der Rückseite der Montagewandung heraus. Da dies wiederum die exakte Ausrichtung des Trägers bei seiner Montage beeinträchtigt, muß der Überstand des Befestigungsmittels so gering wie möglich gehalten werden. Praktisch wurden Blechteile mit dünnen Endstücken verwendet, die auf der Rückseite der Montagewandung umgebogen wurden. Diese Befestigung erwies sich aber als störanfällig und belastete den Fertigungsfluß.

Der Erfindung liegt daher die Aufgabe zugrunde, die Befestigungsvorrichtung so zu gestalten, daß sie einfach an dem Träger anzubringen und betriebssicher bei dessen Montage zu handhaben ist, ohne dabei die Ausrichtung des Trägers zu stören.

Die erfindungsgemäße Lösung dieser Aufgabe ist bei einer Befestigungsvorrichtung der eingangs genannten Art dadurch gekennzeichnet, daß der Schieber einen Arretierschenkel mit der U-förmigen Aufnahme und einen dazu senkrecht stehenden Führungsschenkel mit dem Langloch aufweist, daß diese Schenkel innen an den Wandungen des Trägers anliegen, und daß der Schieber durch einen in die weitere Öffnung in der Führungswandung eingesprengten Knopf aus Kunststoff an dem Träger gehaltert ist.

Ein Ausführungsbeispiel der Erfindung wird anhand der Figuren erläutert; es zeigen

Fig. 1 einen Querschnitt durch einen Ausschnitt eines Leuchtengehäuses,

Fig. 2 eine Teilansicht in Richtung des Pfeiles II in Fig. 1,

Fig. 3 eine Teilansicht in Richtung des Pfeiles III in Fig. 1,

Fig. 4 eine vergrößerte Seitenansicht des Knopfes,

Fig. 5 eine Ansicht des Knopfes nach Fig. 4 in Richtung des Pfeiles V, und

Fig. 6 einen Schnitt durch den Knopf in Fig. 5 entlang Linie VI—VI.

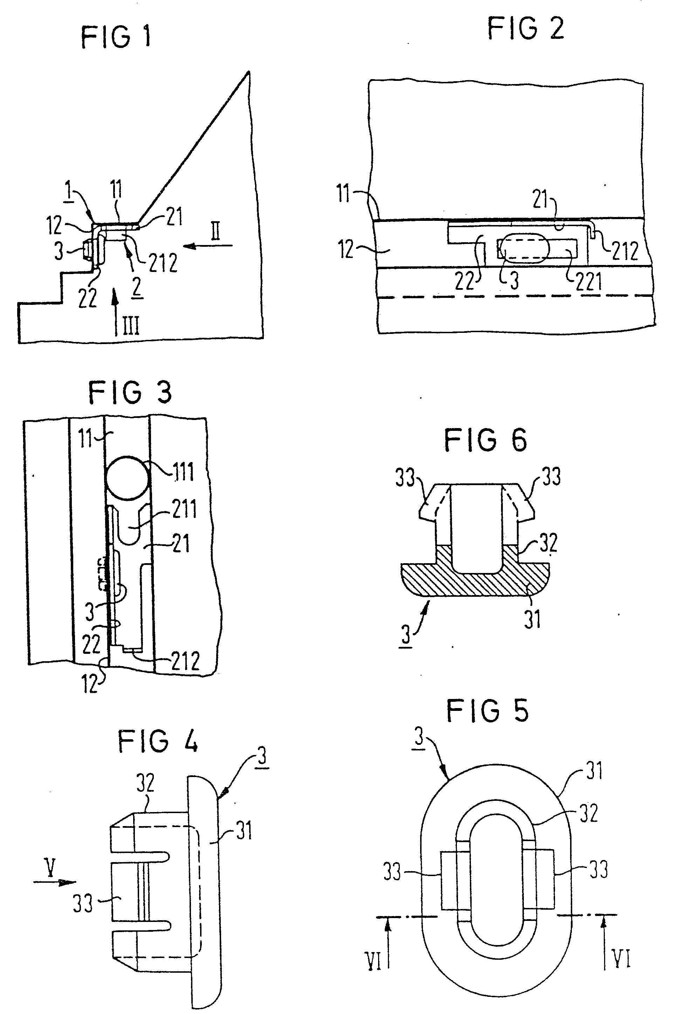

Der Randbereich einer Einbauleuchte weist einen rechtwinkelig ausgebildeten Träger 1 mit einer Montagewandung 11 und einer Führungswandung 12 auf. In der Montagewandung 11 befindet sich eine Öffnung 111 (Fig. 3), die so groß ausgebildet ist, daß sich der Kopf einer Montageschraube von oben durchstecken läßt. In der Führungswandung 12 befindet sich ein Loch für den Schaft 32 des Knopfes 3, mit dem der Schieber 2 gehalten ist.

Der Schieber 2 hat zwei rechtwinkelig zueinander verlaufende Schenkel, einen Arretierschenkel 21 mit einer U-förmigen, offenen Aufnahme 211 am einen Ende und einem winkelig davon abstehenden Griff 212 am anderen Ende, sowie einen Führungsschenkel 22 mit einem Langloch 221 zur Aufnahme des Schaftes 32 des Knopfes 3 (Fig. 2). Die Öffnung in der Führungswandung 12 für den Schaft 32 des Knopfes 3 ist so angeordnet, daß der Arretierschenkel 21 des Schiebers 2 auf der Innenseite der Montagewandung 11 aufliegt (Fig. 2).

Der Knopf 3 ist ein Kunststoffteil mit einem Kopf 31, daran anschließenden Schaft 32 und innerhalb dieses Schaftes liegenden hakenförmigen Federzungen 33. Letztere sind so ausgebildet, daß sie sich bei der Montage des Schiebers 2 an dem Träger 1 durch das Langloch 221 und die Öffnung in der Führungswandung 12 hindurchdrücken lassen und dann auf der Außenseite der Führungswandung zurückfedern und so den Schieber 2 halten. Die Montage gestaltet sich dementsprechend einfach.

Schaft 32 und hakenförmige Federzungen 33 befinden sich auf der Außenseite der Führungswandung 12; die Außenseite der Montagewandung 11 weist dagegen keinerlei Hindernisse auf, die bei der Montage der Leuchte stören könnten.

**Patentanspruch**

Befestigungsvorrichtung zur Verbindung einer Montageschraube mit einem Träger (1), insbesondere einem Träger einer Deckeneinbauleuchte, der rechtwinkelig zueinander verlaufende Montage- und Führungswandungen (11, 12) mit einer Öffnung (111) in der Montagewandung (11) zum Durchstecken des Kopfes der Montageschraube hat, mit einem Schieber (2), der eine U-förmige Aufnahme (211) für den Schaft der Montageschraube und ein Langloch (221) zu seiner Halterung an dem Träger (1) aufweist, wobei ein Befestigungsmittel (3) das Langloch (221) und eine weitere Öffnung des Trägers (1) durchdringt, dadurch gekennzeichnet, daß der Schieber (2) einen Arretierschenkel (21) mit der U-förmigen Aufnahme (211) und einen dazu senkrecht stehenden Führungsschenkel (22) mit dem Langloch (221) aufweist, daß diese Schenkel (21, 22) innen an den Wandungen (11, 12) des Trägers (1) anliegen, und daß der Schieber (2) durch einen in die weitere Öffnung in der Führungswandung (12) eingesprengten Knopf (3) aus Kunststoff an dem Träger (1) gehaltert ist.

## Claim

A fastening device for connecting an assembly screw to a carrier (1), in particular a carrier of a built-in ceiling light, which carrier is provided with assembly and guide walls (11, 12) running at right angles to one another and an opening (111) in the assembly wall (11) for inserting the head of the assembly screw, said fastening device comprising a slide (2) which has a U-shaped receptacle (211) for the shaft of the assembly and a slot (211) which serves to hold the slide on the carrier (1), and wherein a fastening means (3) passes through the oblong hole (221) and a further opening in the carrier (1), characterised in that the slide (2) has a stop arm (21) carrying the U-shaped receptacle (211) and a guide arm (22) at right angles thereto provided with slot (221), that these arms (21, 22) rest inside against the walls (11, 12) of the carrier (1), and that the slide (2) is held onto the carrier (1) by means of a stud (3) which is made of synthetic resin and snapped into the further opening in the guide wall (12).

## Revendication

Dispositif de fixation pour relier une vis de montage avec un support (1), plus particulièrement avec un support d'un plafonnier encastré qui comporte des parois de montage et de guidage (11, 12) s'étendant perpendiculairement entre elles et comportant une ouverture (111) dans la paroi de montage (11) pour le passage de la tête de la vis de montage, un coulisseau (2) pourvu d'une encoche en U (211) pour la tige de la vis de montage et d'une boutonnière (221), en vue de son rattachement au support (1), un moyen de fixation (3) traversant la boutonnière (221) et une seconde ouverture du support (1), caractérisé par le fait que le coulisseau (2) présente une branche de blocage (21) comportant l'encoche (211) et une branche de guidage (22) comportant la boutonnière (221) et qui est perpendiculaire à la branche de guidage, que ces branches (21, 22) portent intérieurement contre les parois (11, 12) du support (1), et que le coulisseau (2) est rattaché au support (1) par la tête (3), en matière plastique, encliquetée dans une seconde ouverture ménagée dans la paroi de guidage (12).

**FIG 1**

**FIG 2**

**FIG 3**

**FIG 6**

**FIG 4**

**FIG 5**